# EUROPÄISCHE PATENTSCHRIFT

(11) **EP 1 703 629 B1**
(45) Veröffentlichungstag und Bekanntmachung des Hinweises auf die Patenterteilung: **29.10.2008**
(21) Anmeldenummer: 06101183.9
(22) Anmeldetag: 02.02.2006
(51) Int. Cl.: H02P 21/00

(54) **Verfahren zur digitalen Stromregelung**
Method for digital current control
Procédé pour la commande digitale de courant

(30) Priorität: 19.03.2005 DE 102005012752
(43) Veröffentlichungstag der Anmeldung: 20.09.2006
(73) Patentinhaber: Continental Aktiengesellschaft, 30165 Hannover (DE)
(72) Erfinder: Stiller, Alexander, Dr., 30823 Garbsen (DE); Rieckmann, Andreas, 30173 Hannover (DE)

(56) Entgegenhaltungen:
- WO-A-01/63739
- DE-A1- 10 248 375
- US-A- 6 008 618
- PARASILITI, F.; PETRELLA, R.; TURSINI, M.: "D4: "Low cost phase current sensing in DSP based AC drives" (1999)" ISIE 1999, Bd. 3, Juli 1999 (1999-07), Seiten 1284-1289, XP002412543

## Beschreibung

Die Erfindung betrifft ein Verfahren zur digitalen Stromregelung von induktiven Lasten mit einer Steuerungseinrichtung, insbesondere mit einem Steuergerät für Kraftfahrzeuge, wobei die Stromregelung mit Hilfe einer pulsweitenmodulierten Spannung erfolgt, und der Strom-Istwert iₘₑₛₛ als Spannungssignal über einen Meßwiderstand und mit Hilfe eines Tiefpaßfilters und eines nachgeschalteten Analog-Digital-Wandlers bestimmt wird, wobei der Strom-Istwert mit einem Strom-Sollwert iₛₒₗₗ verglichen und die Differenz als Eingangswert eines Regelungsalgorithmus zur Berechnung der Einschaltdauer ΔT_{Ein} der pulsweitenmodulierten Spannung genutzt wird, und wobei mit der so bestimmten Einschaltdauer bei der Pulsweitenmodulation ein Spannungsschalter zum Ein- und Ausschalten der Spannung im Schwingkreis angesteuert wird.

Ebenso ist eine zur Durchführung des Verfahrens besonders geeignete Steuerungseinrichtung offenbart.

Es ist im Zusammenhang mit dem Betrieb digitaler Endstufen bekannt, in einem Schwingkreis die Verlustleistung bei induktiven Lasten zu reduzieren, indem man die Stromregelung über eine Modulation der Spannungspulse (Pulsweitenmodulation - PWM) durchführt, also über ein periodisches Ein- und Ausschalten der Spannung. Dies geschieht z. B. über die Schaltfunktion eines Metall-Oxid-Halbleiter-Feldeffekttransistors (MOSFET), der nahezu ohne Schaltleistung zu betreiben ist. Dabei stellt sich ein Stromverlauf über der Zeit ein, der ansteigend und abfallend einer Exponential-Funktion folgt, woraus sich dann ein mittlerer Wert für den Strom ergibt.

Üblicherweise erfolgt die Erzeugung der pulsweitenmodulierten Spannungssignale mit Steuerungseinrichtungen / Mikrocontrollern, die eine unabhängige PWM-Einheit zur Erzeugung eines pulsweitenmodulierten Signals zur Stromregelung einer induktiven Last aufweisen.

Hierzu ist es aber erforderlich, in der Schaltungseinheit, welche die induktive Last beinhaltet, den sich einstellenden mittleren Strom zeitnah zu messen und als Istgröße / Strom-Istwert zu nutzen, wobei der Strom-Istwert mit einer Sollgröße, d. h. einem Strom-Sollwert verglichen und die Differenz als Eingangswert eines Regelungsalgorithmus zur Berechnung der Periode der pulsweitenmodulierten Spannung genutzt wird.

Um nun einen mittleren Strom als Strom-Istwert einer PWM-Regelung zur Verfügung zu stellen ist es bekannt, den aus dem pulsweitenmodulierten Signal resultierenden Strom so stark zu filtern, beispielsweise mit einem Tiefpaßfilter, dass näherungsweise ein dem mittleren Gesamtstrom proportionales Signal entsteht. Dies führt zum einen zu einer sehr geringen zeitlichen Dynamik und ist zum anderen nur dann möglich, wenn der Strom während der Ein- und während der Ausschaltphase der pulsweitenmodulierten Spannung meßtechnisch erfassbar ist. Das Dokument US 6008618 beschreibt einen Drehstromantrieb mit Tiefpaßfiltern für die gemessenen Strangstrome und-spannungen.

Üblicherweise werden aber aus Kostengründen so genannte "Lowside-Schalter" in der Endstufe der angesteuerten Schaltungseinheit verwendet. Bei der Verwendung solcher Schalter kann ein Strom-Istwert aber nur während der eingeschalteten Phase des pulsweitenmodulierten Spannungs-Signals (PWM-Signal) gemessen werden. Während der abgeschalteten Phase des pulsweitenmodulierten Signals fließt der Strom durch die Spule der induktiven Last über eine Freilaufdiode.

Eine weitere Möglichkeit, einen Strom-Istwert zu bestimmen und zu mitteln besteht darin, mit aufwendigeren Endstufen eine Strommessung auch während der nicht aktiven Phase des pulsweitenmodulierten Signals durchzuführen. Die Stromwerte müssen dennoch gefiltert werden, da der Stromverlauf je nach Schaltzustand einer entweder progressiven oder degressiven Exponential-Funktion folgt. Die aufwendigeren Endstufen sind nachteiligerweise mit höheren Kosten verbunden. Zudem ist auf Grund dieser Filterung die Dynamik auch hier verringert. Daher schlägt DE 10248375 vor, dasjenige Strommess-Signal nicht zu verwenden, das dem Lowside-Schalter entpricht, der beim Pulswechselrichter die kürzeste Einschaltdauer aufweist.

Aufgabe der Erfindung ist es daher, ein auch für nur während der Einschaltphase meßbare Ströme anwendbares Verfahren zur synchronen Stromregelung einer induktiven Last mit Hilfe einer pulsweitenmodulierten Spannung bereitzustellen, wobei ein gemessener Strom-Istwert als Istgröße zur Steuerung oder Regelung eines bestimmten Strom-Sollwertes in den Regelkreis rückgeführt wird.

Gelöst wird die Aufgabe durch die Merkmale der Ansprüche 1 und 5. Vorteilhafte Weiterbildungen sind in den weiteren aufgeführten Ansprüchen enthalten.

Hierbei weist das Tiefpassfilter einen Phasenversatz ΔT_{filter} auf, der kleiner ist als ein Fünfzigstel der Periode der Pulsweitenmodulation (ΔT_{filter} < ΔT_{periode} /50). Die Abtastung des Strom-Istwertes erfolgt synchron zur durch die Einschaltsignale T_{Ein(n)} und T_{Ein(n+1)} definierte Periode ΔT_{periode} der Pulsweitenmodulation und mit einem festen Zeitversatz ΔTₘₑₛₛ zum Einschaltsignal der Spannung.

Damit ist man in der Lage, auf die übliche direkte Bildung eines Mittelwertes des gemessenen Strom-Istwert iₘₑₛₛ über eine starke Filterung im Tiefpassfilter zu verzichten und erreicht eine genaue Regelung und eine hohe zeitliche Dynamik. Der für das erfindungsgemäße Verfahren erforderliche Tiefpassfilter kann nämlich mit einer nur geringen Filterung arbeiten, die lediglich der Störungsunterdrückung dient und aus Gründen der elektromagnetischen Verträglichkeit (EMV-Sicherheit) erforderlich ist.

Verstärkt wird die Genauigkeit und die zeitlich möglichst präzise Nachbildung des Signalverlaufes des Strom-Istwertes vorteilhafterweise dadurch, dass die durch die Ein-und Ausschaltsignale T_{Ein (n)} und T_{Aus (n)} definierte Einschaltdauer ΔT_{Ein} zwischen einer oberen und einer unteren Grenze liegt und die Einschaltdauer ΔT_{Ein} und der Zeitversatz ΔTₘₑₛₛ für die Abtastung des Strom-Istwertes so eingestellt sind, dass der Abtastzeitpunkt Tₘₑₛₛ innerhalb der Einschaltdauer ΔT_{Ein} liegt.

Hierbei kann in vorteilhafter Weise das Tiefpassfilter als einfachste Widerstands-Kondensator-Schaltung (RC-Glied) ausgebildet sein.

Vorzugsweise werden die diskreten Werte des gemessenen Strom-Istwert iₘₑₛₛ gespeichert und aus diesen ein Mittelwert Iₘₑₛₛ für den Strom-Istwert gebildet und für den Vergleich mit dem Strom-Sollwert bereitgestellt. Hierdurch erhält man eine gleitende Anpassung, Glättung, und Störungsunterdrückung der Eingangsgröße für die Regelung der Pulsmodulation.

Eine weitere vorteilhafte Ausbildung des Verfahrens besteht darin, dass die Messung des Strom-Istwertes iₘₑₛₛ so erfolgt, dass ein Spannungs-Istwert uₘₑₛₛ gemessen und danach mit Hilfe eines Analog-Digital-Wandlers in ein digitales Spannungssignal umgeformt wird, und schließlich mit Hilfe einer festgelegten Kennlinie in einen Strom-Istwert i_{mess (u)} umgerechnet wird. Hierdurch erreicht man bei dem oben bereits dargestellten nichtlinearen und einer Exponential-Funktion folgenden Stromverlauf eine erhöhte Genauigkeit der Strommessung.

Eine besonders geeignete Steuerungseinrichtung zur Durchführung des Verfahrens ist so ausgebildet, dass einer der Speicher der Steuerungseinrichtung mit einem Wert belegt ist, der beim Durchlaufen der Regelungsschleifen zu Pulsweitenmodulation als ein die Bauteileigenschaften und Herstellungstoleranzen berücksichtigender Korrekturfaktor zur Kalibrierung der Steuerungseinrichtung bei der zur digitalen Stromregelung erforderlichen Abtastung des Strom-Istwert verarbeitet wird, d.h. als Kalibrierfaktor / Kompensationsfaktor zur Verfügung steht. Hierdurch können individuelle Eigenschaften oder Normabweichungen im Aufbau des Steuergerätes kompensiert werden, beispielsweise Widerstandsabweichungen durch Leitungswiderstände an Verbindungen gesteckter IC-Schaltungen oder durch Bauteil-Toleranzen von Widerständen oder Kondensatoren.

In besonders vorteilhafter Weise läßt sich das Verfahren verwenden für die digitale Stromregelung von Ventilen in einer Fahrwerksteuerung für eine Niveauregelung, insbesondere für eine Luftfederregelung. Die hier erforderliche präzise Druck- und Mengenregelung wird durch die Verwendung einer solchen hochgenauen Stromregelung überaus erleichtert und läßt sich dadurch auch auf Komfort-Anwendungen besser anpassen.

Anhand eines Ausführungsbeispiels soll die Erfindung näher erläutert werden. Es zeigen:
- Fig. 1: den Spannungs- und Stromverlauf einer pulsweitenmodulierten Stromregelung für ein Ventil in einer Fahrwerksteuerung,
- Fig. 2: eine mögliche Schaltung für eine pulsweitenmodulierte Stromregelung für ein Ventile in einer Fahrwerksteuerung

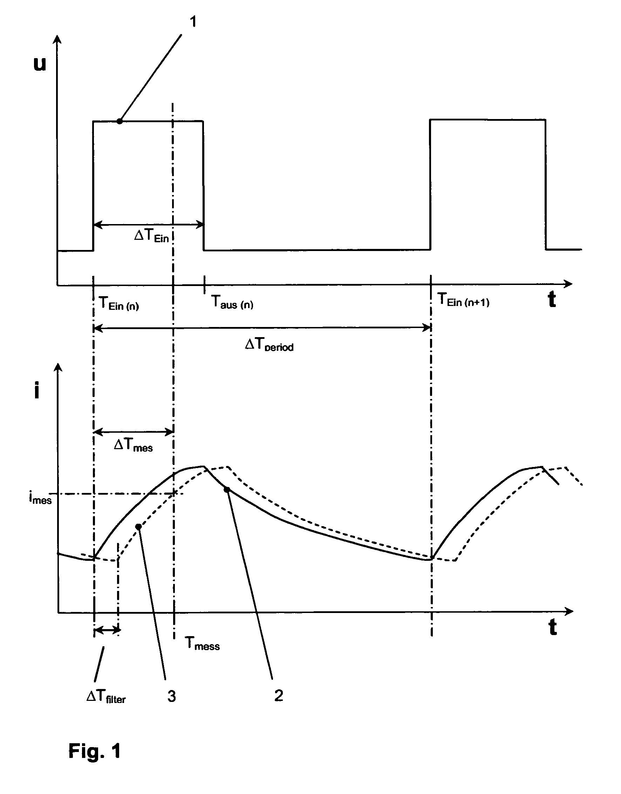

Die Fig. 1 zeigt in ihrem oberen Teil für eine pulsweitenmodulierten Stromregelung den Spannungsverlauf 1 für ein Ventil, d.h. also für eine induktive Last, in einer Fahrwerksteuerung und in seinem unteren Bereich den zugehörigen Stromverlauf 2, nämlich den Stromverlauf an der induktiven Last i_{L} . Strom und Spannung sind jeweils aufgetragen über der Zeit t.

Zwischen zwei Einschaltzeitpunkten T_{Ein (n)} und T_{Ein (n+1)} der Spannung U liegt die Periode ΔT_{periode} der pulsweitenmodulierten Spannung, während zwischen einem Ein- und einem Ausschaltzeitpunkt T_{Ein (n)} und T_{Aus (n)} die Einschaltdauer ΔT_{Ein} liegt.

Die Stromregelung mit Hilfe einer pulsweitenmodulierten Spannung erfolgt nun so, dass der Strom-Istwert iₘₑₛₛ innerhalb der Schaltungseinheit, welche die induktive Last beinhaltet, abgetastet und mit Hilfe eines Tiefpaßfilters und eines nachgeschalteten Analog-Digital-Wandlers bestimmt wird, wobei der Strom-Istwert mit einem Strom-Sollwert iₛₒₗₗ verglichen und die Differenz als Eingangswert eines Regelungsalgorithmus zur Berechnung der Periode ΔT_{periode} und der Einschaltdauer ΔT_{Ein} der pulsweitenmodulierten Spannung genutzt wird.

Das Stromverlauf 3 ist der Verlauf des gemessenen Strom-Istwert iₘₑₛₛ , der durch den Tiefpassfilter mit einem Phasenversatz ΔT_{filter} versehen ist, wobei der Phasenversatz jedoch so gering wie möglich gehalten wird und hier ΔT_{periode} /60 beträgt.

Die Abtastung des Strom-Istwertes erfolgt dabei synchron zur Periode der Pulsweitenmodulation und mit einem festgelegten Zeitversatz ΔTₘₑₛₛ zum Einschaltsignal der Spannung. Der Strom wird also immer zu einem festen, zyklischen Zeitpunkt tₘₑₛₛ ermittelt.

Die durch die Einschaltsignale T_{Ein (n)} und T_{Aus (n)} definierte Einschaltdauer ΔT_{Ein} der Pulsweitenmodulation - und damit auch die Periode ΔT_{periode} - liegt dabei zwischen einer vorgewählten geeigneten oberen und einer unteren Grenze, wird also als Zeitintervall in seine Länge zwischen einem Maximal- und einem Minimalwert eingestellt.

Dies erfolgt erfindungsgemäß so, dass die Einschaltdauer ΔT_{Ein} und der Zeitversatz ΔTₘₑₛₛ für die Abtastung des Strom-Istwertes so eingestellt sind, dass der Abtastzeitpunkt Tₘₑₛₛ innerhalb der Einschaltdauer ΔT_{Ein} und innerhalb der Periode ΔT_{periode} liegt.

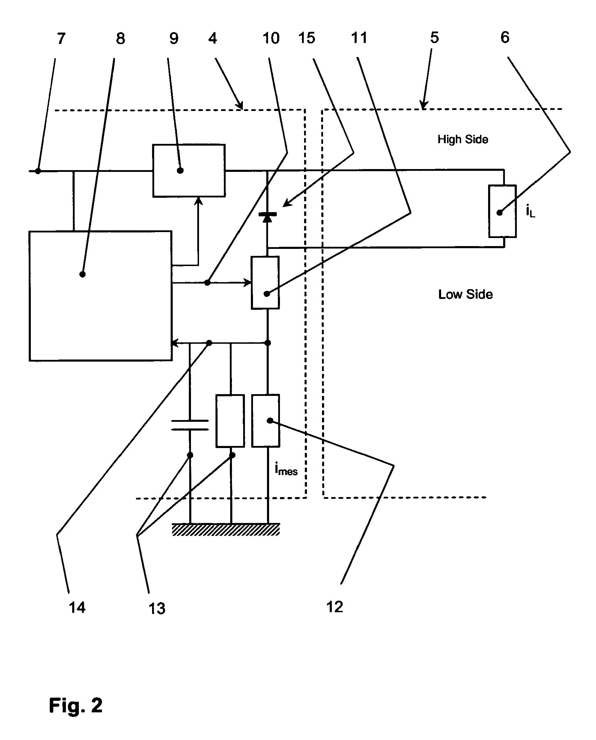

Fig. 2 zeigt eine entsprechende Schaltung für eine pulsweitenmodulierten Stromregelung gemäß Fig. 1 mit einem Steuergerät 4 und einer induktiven Last 5, die in diesem Fall aus einem schaltbaren Pneumatikventil 6 besteht. Das Steuergerät wird durch die Batteriespannung 7 betrieben weist einen mit einem hier nicht näher dargestellten Analog-Digital-Wandler versehenen Micro-Controller 8 auf, also einen kleinen Rechner, der unter anderem ein im Betriebsfall permanent eingeschaltetes Relais 9 ansteuert. Weiterhin wird durch den Micro-Controller 8 über das Steuersignal 10 der MosFET-Schalter 11 und damit die Batteriespannung 7 ein und ausgeschaltet.

Ein Messwiderstand (Shunt) 12 ist parallel zum Tiefpass 13 geschaltet, der als RC-Glied ausgebildet ist. Der gemessenen Strom-Istwert iₘₑₛₛ wird dabei in der erfindungsgemäßen Weise über die Mess-Spannung 14 gemessen und ist durch den geringen Phasenversatz Zeitversatz ΔTₘₑₛₛ für die Abtastung des Strom-Istwertes annähernd gleich dem tatsächlichen und in der induktiven Last vorhandenen Strom / Ventilstrom i_{L} (iₘₑₛₛ ≈ i_{L}). Der so gewonnene Strom-Istwert iₘₑₛₛ wird mit einem Strom-Sollwert iₛₒₗₗ verglichen und die Differenz nach einem im Micro-Controller durchlaufenen Regelungsalgorithmus als Steuersignal 10 zur Ansteuerung des MosFET-Schalters 11 genutzt. Während der abgeschalteten Phase des pulsweitenmodulierten Signals fließt der Strom über die Freilaufdiode 15.

### Bezugszeichenliste

### (Teil der Beschreibung)

- 1: Spannungsverlauf
- 2: Stromverlauf an induktiver Last i_{L}
- 3: Stromverlauf des Strom-Istwert iₘₑₛₛ
- 4: Steuergerät
- 5: Induktive Last
- 6: Pneumatikventil
- 7: Batteriespannung
- 8: Micro-Controller
- 9: Relais
- 10: Steuersignal
- 11: MosFET-Schalter
- 12: Messwiderstand
- 13: Kondesator-Widerstands-Schaltung / RC-Glied
- 14: Meßspannung
- 15: Freilaufdiode

## Patentansprüche

1. Verfahren zur digitalen Stromregelung von induktiven Lasten (5) in Form von Ventilen (6) in einer Fahrwerksteuerung, insbesondere mit einem Steuergerät für Kraftfahrzeuge, wobei die Stromregelung mit Hilfe einer pulsweitenmodulierten Spannung erfolgt, und der Strom-Istwert iₘₑₛₛ als Spannungssignal über einen Meßwiderstand (12) und mit Hilfe eines Tiefpaßfilters (13) und eines nachgeschalteten Analog-Digital-Wandlers bestimmt wird, wobei der Strom-Istwert mit einem Strom-Sollwert iₛₒₗₗ verglichen und die Differenz als Eingangswert eines Regelungsalgorithmus zur Berechnung der Einschaltdauer ΔT_{Ein} der pulsweitenmodulierten Spannung genutzt wird, und wobei mit der so bestimmten Einschaltdauer bei der Pulsweitenmodulation ein Spannungsschalter (11) zum Ein- und Ausschalten der Spannung im Schwingkreis angesteuert wird, wobei das Tiefpassfilter (13) einen Phasenversatz ΔT_{filter} aufweist, der kleiner ist als ein Fünfzigstel der Periode der Pulsweitenmodulation (ΔT_{filter}< ΔT_{periode} /50), und dass die Abtastung des Strom-Istwertes synchron zur durch die Einschaltsignale T_{Ein} (n) und T_{Ein (n+1)} definierte Periode ΔT_{periode} der Pulsweitenmodulation und mit einem festen Zeitversatz ΔTₘₑₛₛ zum Einschaltsignal der Spannung erfolgt, **dadurch gekennzeichnet, dass** die durch die Ein- und Ausschaltsignale T_{Ein} (n) und T_{Aus (n)} definierte Einschaltdauer ΔT_{Ein} zwischen einer oberen und einer unteren Grenze liegt und die Einschaltdauer ΔT_{Ein} und der Zeitversatz ΔTₘₑₛₛ für die Abtastung des Strom-Istwertes so eingestellt sind, dass nur ein einmaliger Abtastzeitpunkt Tₘₑₛₛ innerhalb der Einschaltdauer ΔT_{Ein} liegt.

2. Verfahren nach Anspruch 1, **dadurch gekennzeichnet, dass** das Tiefpassfilter als Widerstands-Kondensator-Schaltung (13) ausgebildet ist.

3. Verfahren nach Anspruch 1 oder 2, **dadurch gekennzeichnet, dass** die diskreten Werte des gemessenen Strom-Istwert iₘₑₛₛ gespeichert und aus diesen ein Mittelwert Iₘₑₛₛ für den Strom-Istwert gebildet und für den Vergleich mit dem Strom-Sollwert bereitgestellt wird.

4. Verfahren nach Anspruch 1 bis 3, **dadurch gekennzeichnet, dass** die Messung des Strom-Istwertes iₘₑₛₛ so erfolgt, dass ein Spannungs-Istwert Uₘₑₛₛ gemessen und danach mit Hilfe eines Analog-Digital-Wandlers in ein digitales Spannungssignal umgeformt wird, und schließlich mit Hilfe einer festgelegten Kennlinie in einen Strom-Istwert i_{mess (u)} umgerechnet wird.

5. Steuerungseinrichtung mit Mitteln zur digitalen Stromregelung von induktiven Lasten (5) in Form von Ventilen (6) in einer Fahrwerkssteuerung, wobei die Stromregelung mit Hilfe einer pulsweitenmodulierten Spannung erfolgt, und der Strom-Istwert iₘₑₛₛ als Spannungssignal über einen Meßwiderstand (12) und mit Hilfe eines Tiefpaßfilters (13) und eines nachgeschalteten Analog-Digital-Wandlers bestimmt wird, wobei der Strom-Istwert mit einem Strom-Sollwert iₛₒₗₗ verglichen und die Differenz als Eingangswert eines Regelungsalgorithmus zur Berechnung der Einschaltdauer ΔT_{Ein} der pulsweitenmodulierten Spannung genutzt wird, und wobei mit der so bestimmten Einschaltdauer bei der Pulsweitenmodulation ein Spannungsschalter (11) zum Ein- und Ausschalten der Spannung im Schwingkreis angesteuert wird, wobei das Tiefpaßfilter (13) einen Phasenversatz ΔTₘₑₛₛ aufweist, der kleiner ist als ein fünfzigstel der Periode der Pulsweitenmodulation (ΔT_{filter} < ΔT_{period}/50), und dass die Abtastung des Strom-Istwertes synchron zur durch die Einschaltsignale T_{Ein(n)} und T_{Ein(n+1)} definierte Periode ΔT_{periode} der Pulsweitenmodulation und mit einem festen Zeitversatz ΔTₘₑₛₛ zum Einschaltsignal der Spannung erfolgt, **dadurch gekennzeichnet,**
- **dass** die durch die Ein- und Ausschaltsignale T_{Ein(n)} und T_{AUS(n)} definierte Einschaltdauer ΔT_{Ein} zwischen einer oberen und einer unteren Grenze liegt und die Ein- Einschaltdauer ΔT_{Ein} und der Zeitversatz ΔTₘₑₛₛ für die Abtastung des Strom-Istwertes so eingestellt sind, dass nur ein einmaliger Abtastzeitpunkt Tₘₑₛₛ innerhalb der Einschaltdauer ΔT_{Ein} liegt, und
- **dass** einer der Speicher der Steuerungseinrichtung mit einem Wert belegt ist, der als ein die Bauteileigenschaften und Herstellungsverfahren berücksichtigender Korrekturfaktor zur Kalibrierung der Steuerungseinrichtung bei der zur digitalen Stromregelung erforderlichen Abtastung des Strom-Istwertes verarbeitet wird.

## Claims

1. Method for digital current control of inductive loads (5) in the form of valves (6) in a ride controller, in particular having a control device for motor vehicles, wherein the current is controlled using a pulse-width-modulated voltage and the actual value iₘₑₐₛ of the current is determined as a voltage signal by means of a measuring resistor (12) and using a low-pass filter (13) and a downstream analogue-to-digital converter, wherein the actual value of the current is compared with a setpoint value iₛₑₜₚ of the current and the difference is used as an input variable of a control algorithm for calculating the switch-on period ΔTₒₙ of the pulse-width-modulated voltage, and wherein a voltage switch (11) for switching the voltage on and off in the actuator circuit is actuated with the switch-on period which is determined in this way for the pulse-width modulation, wherein the low-pass filter (13) has a phase offset ΔT_{filter} which is smaller than a fifth of the period of the pulse-width modulation (ΔT_{filter}<ΔT_{period}/50), and in that the sampling of the actual value of the current occurs in synchronism with the period ΔT_{period}, defined by the switch-on signals Tₒₙ₍ₙ₎ and Tₒₙ₍ₙ₊₁₎, of the pulse-width modulation and occurs with a fixed time offset ΔTₘₑₐₛ with respect to the switch-on signal of the voltage, **characterized in that** the switch-on period ΔTₒₙ, defined by the switch-on and switch-off signals Tₒₙ₍ₙ₎ and T_{off(n)}, is between an upper and a lower limit and the switch-on period ΔTₒₙ and the time offset ΔTₘₑₐₛ for the sampling of the actual value of the current are set in such a way that there is only a single sampling time ΔTₘₑₐₛ within the switch-on period ΔTₒₙ.

2. Method according to Claim 1, **characterized in that** the low-pass filter is embodied as a resistor-capacitor circuit (13).

3. Method according to Claim 1 or 2, **characterized in that** the discrete values of the measured actual value iₘₑₐₛ of the current are stored and a mean value Iₘₑₐₛ for the actual value of the current is formed therefrom and is made available for the comparison with the setpoint value of the current.

4. Method according to Claims 1 to 3, **characterized in that** the actual value iₘₑₐₛ of the current is measured in such a way that an actual value Uₘₑₐₛ of the voltage is measured and then converted into a digital voltage signal using an analogue-to-digital converter, and is finally converted into an actual value i_{meas (u)} of the current using a defined characteristic curve.

5. Control device having means for digital current control of inductive loads (5) in the form of valves (6) in a ride controller, wherein the current is controlled using a pulse-width-modulated voltage and the actual value iₘₑₐₛ of the current is determined as a voltage signal by means of a measuring resistor (12) and using a low-pass filter (13) and a downstream analogue-to-digital converter, wherein the actual value of the current is compared with a setpoint value iₛₑₜₚ of the current and the difference is used as an input variable of a control algorithm for calculating the switch-on period ΔTₒₙ of the pulse-width-modulated voltage, and wherein a voltage switch (11) for switching the voltage on and off in the actuator circuit is actuated with the switch-on period which is determined in this way for the pulse-width modulation, wherein the low-pass filter (13) has a phase offset ΔTₘₑₐₛ which is smaller than a fifth of the period of the pulse-width modulation (ΔT_{filter}<ΔT_{period}/50), and in that the sampling of the actual value of the current occurs in synchronism with the period ΔT_{period}, defined by the switch-on signals Tₒₙ₍ₙ₎ and Tₒₙ₍ₙ₊₁₎, of the pulse-width modulation and occurs with a fixed time offset ΔTₘₑₐₛ with respect to the switch-on signal of the voltage, **characterized**
- **in that** the switch-on period ΔTₒₙ, defined by the switch-on and switch-off signals Tₒₙ₍ₙ₎ and T_{off(n)}, is between an upper and a lower limit and the switch-on period ΔTₒₙ and the time offset ΔTₘₑₐₛ for the sampling of the actual value of the current are set in such a way that there is only a single sampling time ΔTₘₑₐₛ within the switch-on period ΔTₒₙ, and
- **in that** one of the memories of the control device is occupied with a value which is processed as a correction factor which takes into account the component properties and manufacturing methods and has the purpose of standardizing the control device during the sampling of the actual value of the current which is necessary for digital current control.

## Revendications

1. Procédé de régulation numérique du courant de charges inductives (5) sous la forme de vannes (6) dans une commande de mécanisme de roulement, comprenant notamment un module de commande pour véhicules automobiles, la régulation de courant s'effectuant à l'aide d'une tension modulée en largeur d'impulsion et la valeur réelle du courant iₘₑₛ étant déterminée sous la forme d'un signal de tension par le biais d'une résistance de mesure (12) et à l'aide d'un filtre passe-bas (13) et d'un convertisseur analogique/numérique branché en aval, la valeur réelle du courant étant comparée avec une valeur de consigne du courant i_{cons} et la différence étant utilisée comme valeur d'entrée d'un algorithme de régulation en vue de calculer la durée d'activation ΔT_{act} de la tension modulée en largeur d'impulsion, et un commutateur de tension (11) destiné à activer et à désactiver la tension dans le circuit oscillant étant commandé avec la durée d'activation ainsi déterminée lors de la modulation en largeur d'impulsion, le filtre passe-bas (13) présentant un déphasage ΔT_{filtre} qui est inférieur à un cinquantième de la période de modulation en largeur d'impulsion (ΔT_{filtre} < ΔT_{période}/50) et que l'échantillonnage de la valeur réelle du courant s'effectue de manière synchrone à la période ΔT_{période} de la modulation en largeur d'impulsion qui est définie par les signaux d'activation T_{act(n)} et T_{act(n+1)} et avec un décalage dans le temps fixe ΔTₘₑₛ par rapport au signal d'activation de la tension, **caractérisé en ce que** la durée d'activation ΔT_{act} définie par les signaux d'activation T_{act(n)} et de désactivation T_{dés(n)} se situe entre une limite supérieure et une limite inférieure et la durée d'activation ΔT_{act} ainsi que le décalage dans le temps ΔTₘₑₛ sont réglés pour l'échantillonnage de la valeur réelle du courant de telle sorte qu'un seul moment d'échantillonnage Tₘₑₛ est présent dans la durée d'activation ΔT_{act}.

2. Procédé selon la revendication 1, **caractérisé en ce que** le filtre passe-bas est réalisé sous la forme d'un circuit à résistance et condensateur (13).

3. Procédé selon la revendication 1 ou 2, **caractérisé en ce que** les valeurs discrètes de la valeur réelle du courant mesuré iₘₑₛ sont mémorisées et une valeur moyenne Iₘₑₛ de la valeur réelle du courant est calculée à partir de celles-ci et mise à disposition pour la comparaison avec la valeur de consigne du courant.

4. Procédé selon l'une des revendications 1 à 3, **caractérisé en ce que** la mesure de la valeur réelle du courant iₘₑₛ est effectuée de telle sorte qu'une valeur réelle de la tension Uₘₑₛ est mesurée, laquelle est ensuite convertie en un signal de tension numérique à l'aide d'un convertisseur analogique/numérique et finalement convertie en une valeur réelle du courant i_{mes (u)} à l'aide d'une courbe caractéristique donnée.

5. Dispositif de commande comprenant des moyens de régulation numérique du courant de charges inductives (5) sous la forme de vannes (6) dans une commande de mécanisme de roulement, la régulation de courant s'effectuant à l'aide d'une tension modulée en largeur d'impulsion et la valeur réelle du courant iₘₑₛ étant déterminée sous la forme d'un signal de tension par le biais d'une résistance de mesure (12) et à l'aide d'un filtre passe-bas (13) et d'un convertisseur analogique/numérique branché en aval, la valeur réelle du courant étant comparée avec une valeur de consigne du courant i_{cons} et la différence étant utilisée comme valeur d'entrée d'un algorithme de régulation en vue de calculer la durée d'activation ΔT_{act} de la tension modulée en largeur d'impulsion, et un commutateur de tension (11) destiné à activer et à désactiver la tension dans le circuit oscillant étant commandé avec la durée d'activation ainsi déterminée lors de la modulation en largeur d'impulsion, le filtre passe-bas (13) présentant un déphasage ΔTₘₑₛ qui est inférieur à un cinquantième de la période de modulation en largeur d'impulsion (ΔT_{filtre} < ΔT_{période} /50) et que l'échantillonnage de la valeur réelle du courant s'effectue de manière synchrone à la période ΔT_{période} de la modulation en largeur d'impulsion qui est définie par les signaux d'activation T_{act (n)} et T_{act (n+1)} et avec un décalage dans le temps fixe ΔTₘₑₛ par rapport au signal d'activation de la tension, **caractérisé en ce**
- **que** la durée d'activation ΔT_{act} définie par les signaux d'activation T_{act (n)} et de désactivation T_{dés (n)} se situe entre une limite supérieure et une limite inférieure et la durée d'activation ΔT_{act} ainsi que le décalage dans le temps ΔTₘₑₛ sont réglés pour l'échantillonnage de la valeur réelle du courant de telle sorte qu'un seul moment d'échantillonnage Tₘₑₛ est présent dans la durée d'activation ΔT_{act}, et
- **que** l'une des mémoires du dispositif de commande contient une valeur qui est traitée comme un facteur de correction tenant compte des propriétés du composant et du procédé de fabrication en vue de calibrer le dispositif de commande lors de l'échantillonnage de la valeur réelle du courant nécessaire pour la régulation numérique du courant.
